# EUROPEAN PATENT SPECIFICATION

(11) **EP 1 041 872 B1**
(45) Date of publication and mention of the grant of the patent: **30.06.2004**
(21) Application number: 98950507.8
(22) Date of filing: 09.10.1998
(51) Int. Cl.: A01K 1/10, A01K 5/00

(54) **FEEDING FENCE**
FÜTTERUNGSGITTER
GRILLE POUR LE NOURRISSAGE DU BETAIL

(30) Priority: 09.10.1997 NL 1007247
(43) Date of publication of application: 11.10.2000
(73) Proprietor: Weelink, Johannes Martinus Willibrordus, NL-9481 AD Vries (NL)
(72) Inventor: Weelink, Johannes Martinus Willibrordus, NL-9481 AD Vries (NL)
(74) Representative: Van Someren, Petronella F. H. M.
(86) International application number: PCT/NL1998/000582
(87) International publication number: WO 1999/018776

(56) References cited:
- EP-A- 0 397 257
- EP-A- 0 547 719
- EP-A- 0 627 160

## Description

The present invention relates to a cattle feeding system, comprising: a ground surface in a stall; and a feeding fence, for feeding livestock in dosed manner in a stall, the feeding fence comprising:
- an elongate fence slidable over the ground surface; and
- displacing means with at least one motor and a transmission at both ends of the fence and an elongate, rigid, form-retaining guide such as a screw spindle for guiding the fence over the ground surface in the slide direction.

Such a system is known from European patent application 0.397.257, wherein screw spindles are bearing mounted as guides on the fence displaceable over the ground surface, while two (or more than two) motors are placed on the stall floor. The motors are herein connected to a spindle nut engaging the screw spindle as transmission, which is therefore also stationary in relation to the ground surface.

A drawback of the known art is that synchronization of the motors at low cost, irrespective of the type of drive of these motors, be this hydraulic, electrical or other, involves insurmountable problems. An oblique position of the apparatus resulting from different loads on both motors will particularly result in dislocation of the displacing means. This objective can only be realized by adjusting the synchronizing settings of the motors once it has been found that one of the motors is out of synchronization. In the meantime however, damage has possibly already been caused to the guides or to the fence itself. Also proposed as alternative in this publication is a feeding fence with joint driving of at least both sides of the feeding fence by means of a motor and a synchronizing coupling of the transmissions outside the feeding fence. The coupling is arranged outside the feeding fence because the single motor is fixed to the ground surface and the coupling would form in or under the feeding fence an obstruction to the freedom of movement thereof. As a result the coupling is complex and costly, but above all vulnerable.

Another drawback of the known art is that either the motors or the guides are arranged fixed on the ground surface. This results in the undesired situation that one of these components enjoys only very little protection from damaging influences usual in stalls.

It is the object of the present invention to at least obviate the above stated drawbacks of the known art by providing a system which is distinguished in that the displacing means are arranged on the feeding fence, while engaging means coupled to the guide are arranged in stationary manner on the ground surface, wherein the motor is connected in synchronizing arrangement through the fence to each transmission.

Because the motor is arranged according to the present invention on the feeding fence, as are the transmissions and the guides, a synchronizing mechanical connection is possible between the ends in the feeding fence without limitation in the freedom of movement thereof, wherein the guides are connected to the engaging means. An oblique position of the apparatus and therefore dislocation of the displacing means, particularly the transmission and the rigid guide (e.g. a screw spindle), is prevented in effective manner due to the obtained synchronization. The engaging means are arranged in stationary manner on the ground surface, so that during operation of the motor the feeding fence can slide reciprocally relative to the engaging means. It is otherwise noted that a gradual, slow displacement of the feeding fence entails a low rotation speed of the reducing motor, which is accompanied by high moments of force and torques. Expensive reducing motors with a high torque capacity are therefore required in the known art, also for synchronization purposes, while use is made according to the invention of transmissions of the rotation speed-increasing type, whereby it is possible to suffice with lighter reducing motors.

It is noted that European patent application 0.627. 160 relates to a feeder slide with a single motor and a connection between both ends, wherein the guide at each end is an elongate, flexible chain. An oblique position is no problem here since the displacing means are not dislocated in the case of an oblique position because the guide is flexible. The connection between the ends therefore serves only for transfer of the movement generated by the motor to the chains at both ends, wherein an oblique position has no damaging consequences for the displacing means, and there is thus no need for precise synchronization.

The invention will be further elucidated hereinbelow with reference to an embodiment thereof. In the drawing:
fig. 1 shows a perspective view of a feeding fence according to the present invention during use thereof; and
fig. 2 shows a partly cut-away perspective view of a feeding fence corresponding with fig. 1.

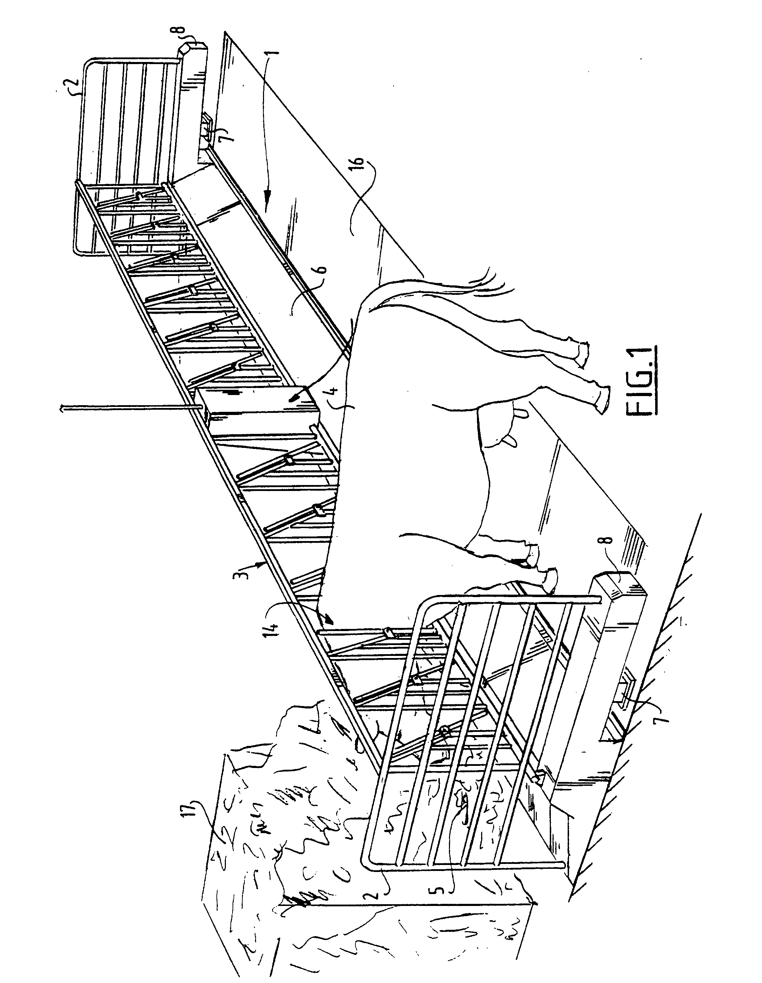

Fig. 1 shows a feeding fence 1 according to the present invention. This feeding fence 1 consists of side partitions and fence 3, wherein fence 3 is provided with passages 14 through which a cow 4 can reach in order to be able to consume fodder 5 which is spread there by an operative or is placed there in the form of a bale or block 17. The latter is otherwise recommended. Fence 3 is placed on a base 6, which base is slidable in a direction transversely of the length direction thereof. Arranged for this purpose are arms 8 in which the displacing means are accommodated, which will be further described hereinbelow. Feeding fence 1 is otherwise displaceable on base 6 through engagement on a part of the pedestals 7 which are arranged in the proximity of arms 8.

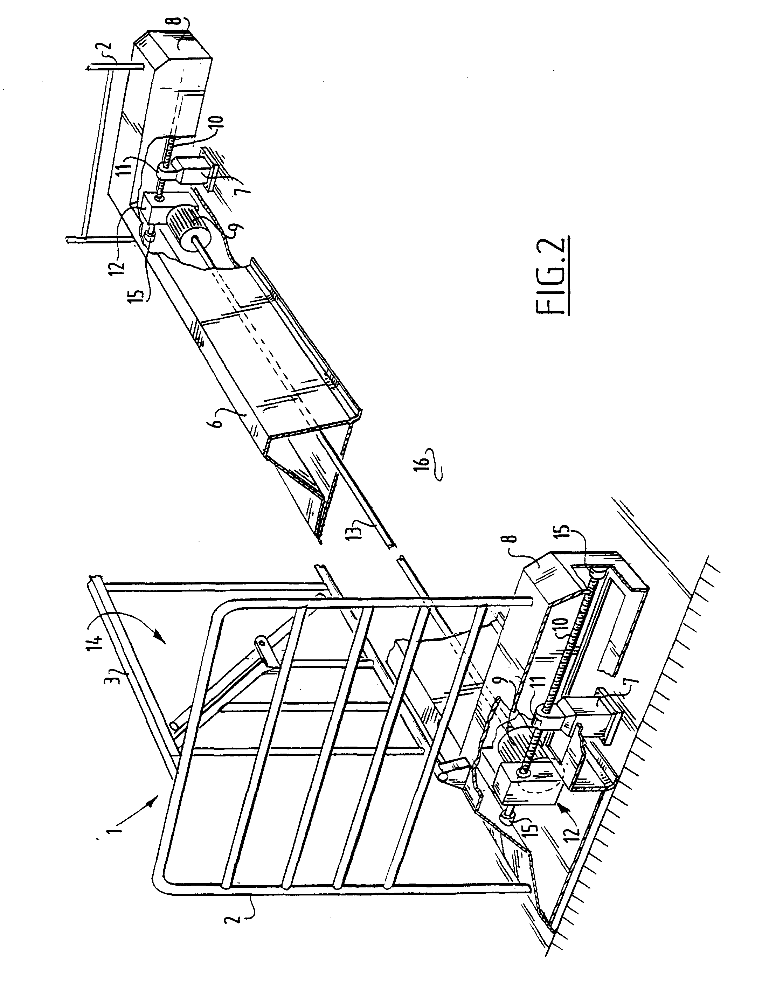

Fig. 2 shows in more detail a partly cut-away view of the configuration of feeding fence 1 shown in fig. 1. Here is shown that the arms 8 each contain a screw spindle 10 oriented in the direction of displacement of feeding fence 1, wherein each of these screw spindles 10 is clamped between bearings 15 so that screw spindles 10 are freely rotatable. Screw spindles 10 are each connected to a motor 9 arranged in the base 6 of feeding fence 1. The connection between motors 9 and screw spindles 10 takes the form of transmissions 12 which have a reducing function, i.e. decreasing rotation speed. A relatively high rotation speed caused by the motors is in this way transferred to the transmissions 12, wherein in response thereto the screw spindles 10 rotate at a low rotation speed.

Pedestals 7 are provided with spindle nuts 11 which each engage a screw spindle 10, whereby the rotation movement of screw spindles 10 is converted into a translating movement thereof, and therefore of the whole feeding fence 1, relative to spindle nuts 11, and therefore relative to stall floor 16.

Both motors 9 are mutually connected using a connecting rod 13 which is placed rotatably through base 6. Because both motors are constrained to run synchronously as a result hereof and the transmissions 12 are identical, displacement of feeding fence 1 in a direction other than the length direction of screw spindles 10 is precluded and a possible oblique position of feeding fence 1 is prevented in effective manner.

Screw spindles 10, spindle nuts 11, motors 9, transmissions 12 and connecting rod 13 are otherwise encased, or in any case covered over, by a part of feeding fence 1, i.e. arms 8 and base 6. As a result an effective protection is provided against outside influences, such as that of excreta from the livestock.

As an alternative to the above described feeding fence, it is also mentioned here that it is also possible within the scope of the present invention to make use of a single motor connected via connections to both transmissions. Synchronization is ensured as well as simplicity of the configuration, in addition to a cost-saving because only one motor is applied. All potentially vulnerable components are here too arranged in protected manner in the interior of the feeding fence.

Additional engaging means are provided in the feeding fence according to the present invention whereby it is possible to arrange the whole relatively vulnerable configuration of motors, transmissions and guides (screw spindles) in the feeding fence and to provide synchronization of the motors while a component relatively insensitive to influences (the spindle nut), which functions as engaging means, is added in order to bring about displacement relative thereto. The problem of the known art is substantially obviated hereby, since neither the guide nor the motors and transmissions have to be placed fixedly on the ground surface, which has the effect that the motors can be mutually coupled for synchronization thereof and the guides do not extend any further in front of and behind the feeding fence than is necessary for the functioning thereof.

## Claims

1. Cattle feeding system, comprising: a ground surface in a stall; and a feeding fence (1), for feeding livestock (4) in dosed manner in the stall, said feeding fence comprising:
- an elongate fence (1) slidable over the ground surface; and
- displacing means with at least one motor (9) and a transmission at both ends of the fence and an elongate, rigid, form-retaining guide (10) such as a screw spindle for guiding the fence (1) over the ground surface in the slide direction;
**characterized in that** the displacing means are arranged on the feeding fence (1), while engaging means (11) coupled to the guide (10) are arranged in stationary manner on the ground surface, wherein the at least one motor (9) is connected in synchronizing arrangement (13) through the fence (1) to each transmission (12).

2. The system as claimed in claim 1, wherein two motors (9) are arranged on either side of the fence (1) and are coupled in mechanically synchronizing manner.

3. The system as claimed in claim 1 or 2, wherein the coupling of the motors (9) comprises a mechanical connection (13).

4. The system as claimed in claim 1, 2 or 3, wherein the transmissions connect the at least one motor (9) and a screw spindle (10) which latter oriented in the direction of displacement, and the engaging means (11) comprise a spindle nut co-acting therewith.

5. The system as claimed in claim 4, wherein the screw spindle (10) is mounted on the feeding fence (1) and the motor (9) coupled to the screw spindle (10) is in stationary arrangement relative to the feeding fence (1) and the spindle nut (11) is fixed in stationary manner to the stall floor.

6. The system as claimed in claim 4 or 5, wherein the transmissions are adapted for rotation speed-reducing transmission.

## Patentansprüche

1. Viehfütterungssystem, aufweisend: eine Bodenoberfläche in einem Stall; und einen Fütterungszaun 1 zur Fütterung von Vieh (4) in dosierter Art und Weise in dem Stall, wobei der Fütterungszaun aufweist:
- einen langgestreckten Zaun (1), der über der Bodenoberfläche verschiebbar ist; und
- Versatzvorrichtungen mit wenigstens einem Motor (9) und einem Getriebe an beiden Enden des Zauns und einer langgestreckten, steifen, formstabilen Führung (10) wie einer Schraubspindel zur Führung des Zauns (1) über die Bodenoberfläche in der Verschieberichtung;
**dadurch gekennzeichnet, daß** die Versatzvorrichtungen auf dem Fütterungszaun (1) angeordnet sind, während die Eingriffsvorrichtungen (11), die mit der Führung (10) gekoppelt sind, auf der Bodenoberfläche in einer stationären Art und Weise angeordnet sind, wobei der wenigstens eine Motor (9) in synchronisierter Anordnung (13) durch den Zaun (1) mit jedem Getriebe (12) verbunden ist.

2. System gemäß Anspruch 1, wobei zwei Motoren (9) auf jeweils einer Seite des Zauns (1) angeordnet und in mechanisch synchronisierter Art und Weise gekoppelt sind.

3. System gemäß Anspruch 1 oder 2, wobei die Kopplung der Motoren (9) eine mechanische Verbindung (13) aufweist.

4. System gemäß Anspruch 1, 2 oder 3, wobei die Getriebe wenigstens einen Motor (9) und eine Schraubspindel (10) verbinden, wobei letztere in der Versatzrichtung ausgerichtet ist, und wobei die Eingriffsvorrichtung (11) eine damit zusammenwirkende Spindelmutter aufweist.

5. System gemäß Anspruch 4, wobei die Schraubspindel (10) auf dem Fütterungszaun (1) befestigt ist und der Motor (9), der mit der Schraubspindel (10) gekoppelt ist, in einer stationären Anordnung relativ zu dem Fütterungszaun (1) angeordnet ist, und die Spindelmutter (11) in einer stationären Art und Weise auf dem Stallboden befestigt ist.

6. System gemäß Anspruch 4 oder 5, wobei die Getriebe zur drehzahlreduzierten Drehzahlübertragung angepaßt sind.

## Revendications

1. Système d'alimentation pour le bétail comprenant : une surface de sol dans une stalle ; et une clôture d'alimentation (1) pour alimenter le bétail (4) par dose dans la stalle, ladite clôture d'alimentation comprenant :
une clôture allongée (1) pouvant coulisser sur la surface de sol ; et
des moyens de déplacement avec au moins un moteur (9) et une transmission située aux deux extrémités de la clôture et un guide en forme de retenue, allongé, rigide (10) tel qu'un arbre fileté pour guider la clôture (1) sur la surface de sol dans la direction du coulissement ;
**caractérisé en ce que** les moyens de déplacement sont agencés sur la clôture d'alimentation (1), tandis que les moyens de mise en prise (11) couplés au guide (10) sont agencés d'une manière stationnaire sur la surface de sol, dans lequel au moins un moteur (9) est raccordé selon un agencement synchronisé (13) par le biais de la clôture (1) à chaque transmission (12).

2. Système selon la revendication 1, dans lequel deux moteurs (9) sont agencés de chaque côté de la clôture (1) et sont couplés d'une manière mécaniquement synchronisée.

3. Système selon la revendication 1 ou 2, dans lequel le couplage des moteurs (9) comprend un raccordement mécanique (13).

4. Système selon la revendication 1, 2 ou 3, dans lequel les transmissions raccordent le au moins un moteur (9) et un arbre fileté (10) qui est orienté plus tard dans la direction de déplacement, et les moyens de mise en prise (11) comprennent un écrou de moyeu qui co-agit avec eux.

5. Système selon la revendication 4, dans lequel l'arbre fileté (10) est monté sur la clôture d'alimentation (1) et le moteur (9) couplé à l'arbre fileté (10) est en agencement stationnaire par rapport à la clôture d'alimentation (1) et l'écrou de moyeu (11) est fixé d'une manière stationnaire sur le sol de la stalle.

6. Système selon la revendication 4 ou 5, dans lequel les transmissions sont adaptées pour la transmission de réduction de la vitesse de rotation.
